# EUROPÄISCHE PATENTANMELDUNG

(11) **EP 4 436 015 A1**
(43) Veröffentlichungstag der Anmeldung: **25.09.2024**
(21) Anmeldenummer: 23163147.4
(22) Anmeldetag: 21.03.2023
(51) Int. Cl.: H02K 15/00, H02K 17/16, H02K 3/02

(54) **ROTOR EINES KÄFIGLÄUFER-MOTORS, KÄFIGLÄUFER-MOTOR MIT EINEM ROTOR UND VERFAHREN ZUR HERSTELLUNG EINES ROTORS EINES KÄFIG-LÄUFER-MOTORS**

(71) Anmelder: Innomotics GmbH, 90441 Nürnberg (DE)
(72) Erfinder: Krompasky, Erik, 25216 Nucice (CZ)
(74) Vertreter: Siemens Patent Attorneys

(57) **Zusammenfassung**

Die Erfindung betrifft einen Rotor (1) eines Käfigläufer-Motors mit einem Kurzschlusskäfig, wobei sich Läuferstäbe (2) des Kurzschlusskäfigs in Axialrichtung durch einen zylindrischen Läuferkörper (3) erstrecken, dadurch gekennzeichnet, dass die Läuferstäbe (2) mit dem Läuferkörper (3) jeweils durch eine Schweißverbindung (4) verbunden sind, insbesondere durch eine Elektronenstrahl- oder Laserstrahl-Schweißverbindung.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft einen Rotor eines Käfigläufer-Motors mit einem Kurzschlusskäfig, wobei sich Läuferstäbe des Kurzschlusskäfigs in Axialrichtung durch einen zylindrischen Läuferkörper erstrecken, gemäß dem Oberbegriff des Patentanspruchs 1, sowie ein Verfahren zu seiner Herstellung.

Bei Asynchronmaschinen wird meist in einem Rotor, der relativ zu einem Stator drehbar gelagert ist, ein sogenannter Kurzschlusskäfig vorgesehen. Der Rotor der Asynchronmaschine wird daher auch als Käfigläufer oder Kurzschlussläufer bezeichnet. Der Kurzschlusskäfig weist Läuferstäbe auf, die im Allgemeinen parallel oder leicht schräg zu der Rotationsachse des Käfigläufers, d.h. in Axialrichtung verlaufend angeordnet sind.

Die Läuferstäbe sind in den Läuferkörper eingefügt, der meist als Lamellenpaket aus einer Vielzahl von axial nebeneinander gestapelten Blechlamellen gebildet wird.

Die Läuferstäbe sind in Ausnehmungen oder Nuten in das Lamellenpaket eingelegt. An ihren Enden sind die Läuferstäbe durch Kurzschlussringe, welche an beiden stirnseitigen Enden des Läuferkörpers angeordnet sind, elektrisch miteinander verbunden.

Während des Betriebs der elektrischen Maschine werden in dem Kurzschlusskäfig aufgrund variierender Magnetfelder starke Ströme induziert. Um dabei die Widerstandsverluste gering zu halten, besteht die Läuferstäbe im Allgemeinen aus einem Material mit hoher elektrischer Leitfähigkeit wie beispielsweise aus Kupfer, Aluminium oder Stahl, oder einer Legierung umfassend zumindest eines dieser Metalle und weitere Materialien.

Allerdings weisen die genannten Materialien eine verhältnismäßig geringe mechanische Festigkeit auf.

Wenn der Rotor auf hohe Drehzahlen beschleunigt wird, neigen daher die Komponenten des Kurzschlusskäfigs, insbesondere die Läuferstäbe dazu, sich aufgrund von Fliehkräften zu verformen. Eine Verringerung der Festigkeit der Komponenten, wie sie bei den im Betrieb häufig vorkommenden hohen Temperaturen auftreten kann, verstärkt die Deformationstendenzen zusätzlich.

Um Deformationen der Läuferstäbe zu vermeiden, werden diese herkömmlich auch durch von außen umgreifende Bandagen gestützt.

Die genannten Maßnahmen erhöhen Kosten und Komplexität der Asynchronmaschine.

Der Erfindung liegt daher die Aufgabe zugrunde, einen Rotor eines Käfigläufer-Motors anzugeben, bei dem eine stabile mechanische Fixierung der Läuferstäbe im Läuferkörper gewährleistet ist und der einfach herzustellen ist.

### LÖSUNG DER AUFGABE

Diese Aufgabe wird bei einem Rotor der eingangs genannten Art dadurch gelöst, dass die Läuferstäbe mit dem Läuferkörper jeweils durch eine Schweißverbindung verbunden sind, insbesondere durch eine Elektronenstrahl- oder Laserstrahl-Schweißverbindung.

Durch die Schweißverbindung wird eine stabile mechanische Fixierung der Läuferstäbe im Läuferkörper erreicht, sodass diese gegen eine Verschiebung relativ zum Läuferkörper gesichert sind. Außerdem sind die Läuferstäbe auch gegen Zentrifugalkräfte bei hohen Drehzahlen und Kräfte durch Temperaturveränderungen mechanisch gesichert. Im Betrieb entsteht durch die stabile mechanische Fixierung der Läuferstäbe keine mechanische Unwucht des Rotors, was einen sicheren und effizienten Betrieb gewährleistet. Weiters werden unterschiedliche Materialkombinationen von Läuferstäben und Läuferkörper ermöglicht. Die genannten Maßnahmen können in einem einfachen Herstellungsverfahren ausgeführt werden.

### BESCHREIBUNG DER ERFINDUNG

Vorteile und Ausgestaltungen der Erfindung, die einzeln oder in Kombination miteinander einsetzbar sind, sind Gegenstand der Unteransprüche.

Vorteilhaft ist es, wenn sich die Schweißverbindungen in axialer Richtung im Wesentlichen über eine gesamte axiale Erstreckung des Läuferkörpers erstrecken.

Durch diese Maßnahme wird die mechanische Festigkeit der Verbindung weiter erhöht.

Weiters vorteilhaft ist es, wenn der Läuferkörper entlang seines Umfangs eine Mehrzahl an Nuten in Axialrichtung aufweist, die Nuten jeweils zwei Seitenwände aufweisen, die sich in radialer Richtung von einer Nutöffnung zu einem Nutgrund erstrecken, die Läuferstäbe in den Nuten an den Seitenwänden anliegend angeordnet sind und die Läuferstäbe mit ihren an den Seitenwänden anliegenden Flächen mit zumindest jeweils einer Seitenwand, vorzugsweise mit jeweils beiden Seitenwänden, jeweils durch die Schweißverbindung verbunden sind.

Besonders vorteilhaft ist es, wenn sich die Schweißverbindungen entlang der radialen Erstreckung der Seitenwände zumindest über 30% der Seitenwände von der Nutöffnung beginnend in Richtung des Nutgrunds erstrecken, vorzugsweise zumindest über 60%, besonders bevorzugt zumindest über 90%.

Durch ein tiefes Eindringen der Schweißverbindung in die Nut wird die mechanische Festigkeit der Verbindung weiter erhöht.

Besonders vorteilhaft ist es auch, wenn die Läuferstäbe im Querschnitt jeweils einen ersten und zumindest einen zweiten Bereich aufweisen und die Bereiche aus voneinander unterschiedlichen elektrisch leitfähigen Materialien, insbesondere aus Metall, wie Kupfer, Aluminium oder Stahl, oder einer Legierung umfassend zumindest eines dieser Metalle und weitere Materialien, gebildet sind.

Die Ausführung der Läuferstäbe mit Bereichen unterschiedlicher Materialien ermöglicht es beispielsweise, Läuferstäbe in einem ersten Bereich aus Materialien herzustellen, die nicht direkt mit dem Läuferkörper verschweißbar sind, welche dann indirekt über den zweiten Bereich mit dem Läuferkörper verschweißt werden können. Außerdem können durch diese Maßnahme Läuferstäbe hergestellt werden, die durch die unterschiedlichen Materialien in unterschiedlichen Bereich, bedingt durch den Effekt der Stromverdrängung, besser an spezielle Betriebspunkte oder Betriebsarten angepasst sind.

Weiters ist es vorteilhaft, wenn der zweite Bereich den ersten Bereich vollständig umgibt.

Dadurch ist eine Schweißverbindung in einem größeren Bereich möglich und die mechanische Fixierung der Läuferstäbe im Läuferkörper wird weiter erhöht. Außerdem ist dadurch eine weitere Anpassung der Läuferstäbe an unterschiedliche geforderte Betriebseigenschaften möglich.

Außerdem ist es vorteilhaft, wenn die Läuferstäbe im Querschnitt zumindest einen dritten Bereich aufweisen, welcher aus einem vom ersten oder zweiten Bereich unterschiedlichen elektrisch leitfähigen Material, insbesondere aus Metall, wie Kupfer, Aluminium oder Stahl, oder einer Legierung umfassend zumindest eines dieser Metalle und weitere Materialien, gebildet ist.

Durch diese Maßnahme können die elektrischen Eigenschaften der Läuferstäbe weiter variiert werden und noch genauer an spezielle Betriebspunkte und Betriebsarten angepasst werden. Außerdem werden die Möglichkeiten, Materialien einzusetzen, die nicht direkt mit dem Läuferkörper verschweißbar sind, weiter vergrößert und unterschiedliche Materialkombinationen ermöglicht.

Weiters ist es vorteilhaft, wenn der dritte Bereich den zweiten Bereich vollständig umgibt.

Dadurch ist eine Schweißverbindung in einem größeren Bereich möglich und die mechanische Fixierung der Läuferstäbe im Läuferkörper wird weiter erhöht. Außerdem ist dadurch eine weitere Anpassung der Läuferstäbe an unterschiedliche geforderte Betriebseigenschaften möglich.

Weiters ist es vorteilhaft, wenn der Läuferkörper entlang seines Umfangs eine Mehrzahl an Nuten in Axialrichtung aufweist, und die Nuten einen Nutgrund aufweisen, der in Axialrichtung zu einer Achse des Läuferkörpers in einem Winkel geneigt ausgeführt ist, und die Läuferstäbe mit einer Fläche am Nutgrund angeordnet sind, welche in einem Winkel zur Axialrichtung zu einer Achse des Läuferkörpers geneigt ausgeführt ist.

Durch diese Maßnahme können Läuferstäbe, welche in den Läuferkörper eingeführt sind, mit diesem verklemmt werden, sodass sich eine verbesserte mechanische Fixierung bzw. eine Verklemmung ergibt. Diese Maßnahme sorgt schon allein für sich, ohne zusätzliche Schweißverbindungen, für eine stabile Fixierung der Läuferstäbe.

Außerdem ist es vorteilhaft, wenn die Läuferstäbe formschlüssig im Läuferkörper angeordnet sind.

Dadurch wird eine zusätzliche verbesserte mechanische Fixierung der Läuferstäbe im Läuferkörper erreicht. Dies kann beispielsweise durch Keilnuten und entsprechenden keilförmigen Läuferstäben erreicht werden.

Die eingangs genannte Aufgabe wird außerdem gelöst durch ein Verfahren zur Herstellung eines erfindungsgemäßen Rotors eines Käfigläufer-Motors, wobei die Schweißverbindung zur Verbindung der Läuferstäbe mit dem Läuferkörper mit einem Elektronenstrahl- oder Laserstrahl-Schweißverfahren hergestellt wird.

Durch das Elektronenstrahl- oder Laserstrahl-Schweißverfahren wird eine in Radialrichtung tiefe Schweißverbindung ermöglicht, die zu einer verbesserten mechanischen Fixierung der Läuferstäbe mit dem Läuferkörper führt.

Weiters ist es vorteilhaft, wenn die elektrisch leitfähigen Materialien der Bereiche stoffschlüssig miteinander verbunden werden, insbesondere durch Explosionsschweißen bzw. Sprengplattieren, Elektronenstrahl-Schweißen, LaserstrahlSchweißen, Galvanisierung, Draht-Elektronenstrahl-Auftragsschweißen, Laser-Auftragsschweißen oder Reibschwei-βen.

Durch diese Maßnahmen können eine Vielzahl unterschiedlicher Materialen dauerhaft, mechanisch fest und elektrisch leitfähig miteinander verbunden werden und so die mechanischen und elektrischen Eigenschaften des Rotors verbessert werden.

Besonders vorteilhaft ist es, wenn die Läuferstäbe in den Läuferkörper eingeführt werden und der Läuferkörper vor dem Einführen der Läuferstäbe aufgeheizt wird.

Dadurch wird eine verbesserte mechanische Fixierung bzw. eine Verklemmung der Läuferstäbe im Läuferkörper erreicht. Diese Maßnahme ist besonders in Kombination mit der Ausführungsvariante mit geneigten Nutgründen vorteilhaft, da die Kombination zu einer äußerst stabilen Verklemmung und damit Fixierung der Leiterstäbe führt.

### FIGURENBESCHREIBUNG

Im Folgenden wird die Erfindung anhand der in den Figuren dargestellten Ausführungsbeispiele näher beschrieben und erläutert. Es zeigen beispielhaft:
Fig. 1, 2, 3, 4, 5 und 6 unterschiedliche Ausführungsformen eines Ausschnitts eines erfindungsgemäßen Rotors mit unterschiedlichen Läuferstäben jeweils in einem Läuferkörper,
Fig. 7, 8, 9 und 10 unterschiedliche Ausführungsformen von Läuferstäben,
Fig. 11 einen Schnitt in Radialrichtung durch eine Elektronenstrahl-Schweißverbindung und
Fig. 12, 13 und 14 eine weitere Ausführungsform eines erfindungsgemäßen Rotors.

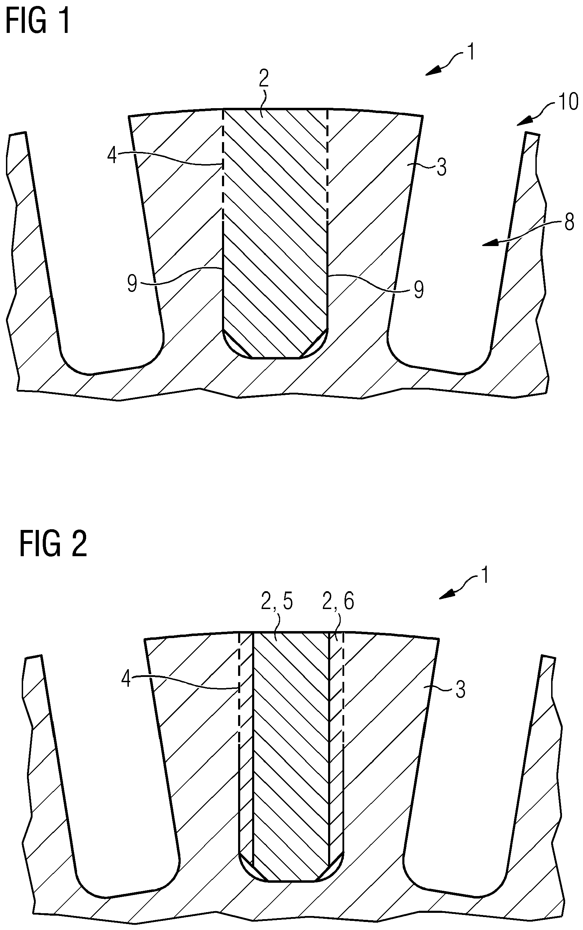

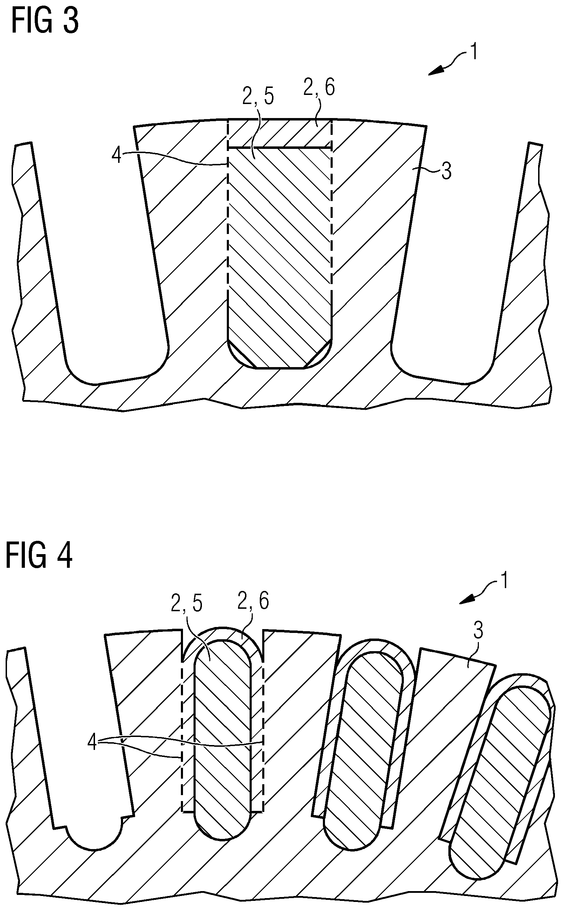

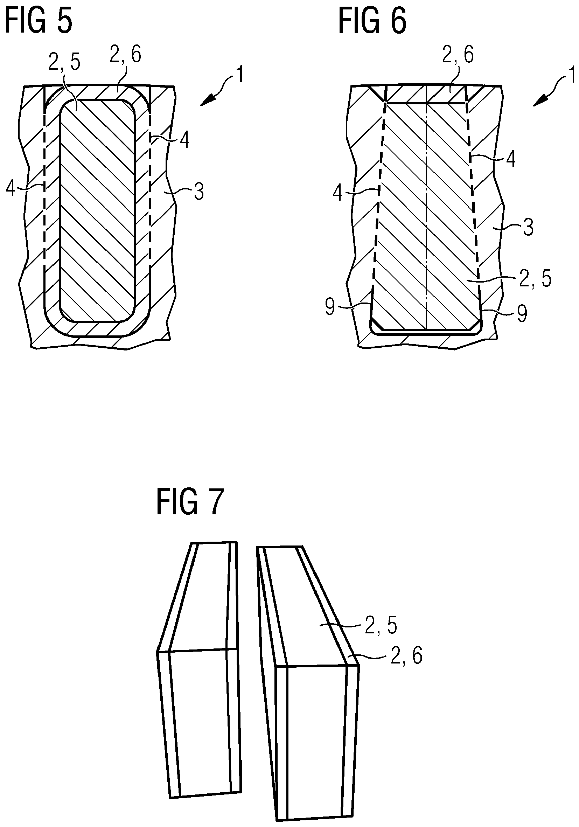

Die Figuren 1, 2, 3, 4, 5 und 6 zeigen unterschiedliche Ausführungsformen eines Ausschnitts eines erfindungsgemäßen Rotors 1 mit unterschiedlichen Läuferstäben 2 jeweils in einem Läuferkörper 3. Der Läuferkörper kann dabei aus einem geschichteten Blechpaket oder einem massiven Körper, beispielsweise aus Stahl, bestehen. In den Figuren sind weiters Nuten 8 mit jeweils Seitenwänden 9, einer Nutöffnung 10 und einem Nutgrund 11 dargestellt. In den Figuren 1-5 sind diese Nuten 8 beispielhaft als Hochstabnuten ausgeführt, in Figur 6 sind die Nuten 8 beispielhaft als Keilstabnuten ausgeführt. Die Ausführung der Nuten 8 als Keilnuten bewirkt dabei eine verbesserte mechanische Fixierung der daran angepassten Läuferstäbe 2 im Läuferkörper 3 durch eine formschlüssige Verbindung. Unterschiedliche Ausführungen der Nuten 8 führen durch den Effekt der Stromverdrängung außerdem zu unterschiedlichen Betriebseigenschaften des Käfigläufer-Motors. In den Figur 1-6 sind einzelne Nuten 8 vereinfacht ohne Läuferstäbe 2 dargestellt. Es wird darauf hingewiesen, dass in jeder Nut 8 zumindest ein Läuferstab 2 eingesetzt ist. In Figur 1 ist ein Läuferstab 2 dargestellt, der durchgängig aus dem gleichen Material besteht. In den Figuren 2-6 sind sogenannte Hybrid-Läuferstäbe dargestellt, welche aus zumindest zwei Bereichen 5 und 6 bestehen, die aus unterschiedlichen Materialien bestehen. Diese Materialien sind beispielsweise Kupfer, Aluminium, Stahl oder Legierungen mit diesen Metallen und weiteren Materialien. In den Figuren 1-6 sind Schweißverbindungen 4 dargestellt. Durch diese Schweißverbindungen 4 werden die Läuferstäbe 2 stoffschlüssig mit dem Läuferkörper 3 verbunden. Die Schweißverbindungen 4 verlaufen dabei in Radialrichtung des Läuferkörpers 3 entlang der Seitenwände 9. Die Schweißverbindungen 4 können jeweils an lediglich einer der Seitenwände 9 oder jeweils an beiden Seitenwänden 9 der Nuten 8 ausgeführt sein. Die Schweißverbindungen 4 können sich dabei in eine große radiale Tiefe der Nuten 8 erstrecken, wie dies in den Figuren 1-6 dargestellt ist. Als Schweißverbindung 4 ist dabei ein Elektronenstrahl-Schweißverfahren, Laserstrahl-Schweißverfahren oder ein anderes Schweißverfahren besonders geeignet, welches eine Schweißverbindung in eine große Tiefe der Nuten 8 bzw. eine große radiale Erstreckung der Seitenwände 9 hinein ermöglicht. Alternativ dazu kann eine Schweißverbindung 4 nur im Oberflächenbereich des Läuferkörpers 3 ausgeführt sein. Im Ausführungsbeispiel aus Figur 3 wäre dies beispielsweise eine Schweißverbindung 4 nur zwischen dem zweiten Bereich 6 und dem Läuferkörper 3. In den Ausführungsbeispielen nach den Figuren 5 und 6 ist diese Art von Schweißverbindungen 4 im Oberflächenbereich durch Dreiecke (ohne Bezugszeichen) angedeutet. Hierbei können unterschiedlichste Arten von Schweißverfahren angewendet werden. Die Schweißverbindungen 4 können sich in Axialrichtung des Läuferkörpers 3 über dessen gesamte axiale Ausdehnung erstrecken und somit die Läuferstäbe 2 jeweils über deren gesamte axiale Erstreckung mit dem Läuferkörper 3 verbinden. Die Schweißverbindungen 4 zwischen den Läuferstäben 2 und dem Läuferkörper 3 können zusätzlich oder alternativ dazu in einem Stirnbereich des Läuferkörpers 3 ausgeführt sein.

Die Ausführung der Läuferstäbe 2 als Hybrid-Stäbe mit einem ersten Bereich 5 und zumindest einem zweiten Bereich 6 ermöglicht es, Läuferstäbe 2 mit einem Material einzusetzen, welches nicht direkt mit dem Läuferkörper 3 verschweißbar ist. Dies ist in den Fig. 2, 4, 5 und 6 dargestellt. Die Läuferstäbe 2 können in diesem Fall über den zweiten Bereich 6 mit dem Läuferkörper verschweißt werden. Es ist aber auch möglich, eine Schweißverbindung 4 zwischen beiden Bereichen 5 und 6 mit dem Läuferkörper 3 herzustellen, wenn die verwendeten Materialen dazu geeignet sind. Besonders vorteilhaft ist es, wenn ein erster Bereich 5 beispielsweise aus Kupfer oder Aluminium besteht und ein zweiter Bereich 6, welcher mit dem Läuferkörper 3 verschweißt ist, aus Stahl besteht, da Stahl besonders zum Verschweißen mit den für den Läuferkörper verwendeten Materialien, wie beispielsweise Stahl, Eisen, Stahlblechen oder Eisenblechen, geeignet ist und Kupfer oder Aluminium besonders gut als Material für Läuferstäbe geeignet sind. Die Ausführung der Läuferstäbe 2 dient nicht nur zur Ermöglichung einer besseren Schweißverbindung 4 sondern nutzt auch die unterschiedliche Leitfähigkeit der verwendeten Materialien um unterschiedliche Betriebseigenschaften des Käfigläufer-Motors, bedingt durch den Effekt der Stromverdrängung, zu erzielen.

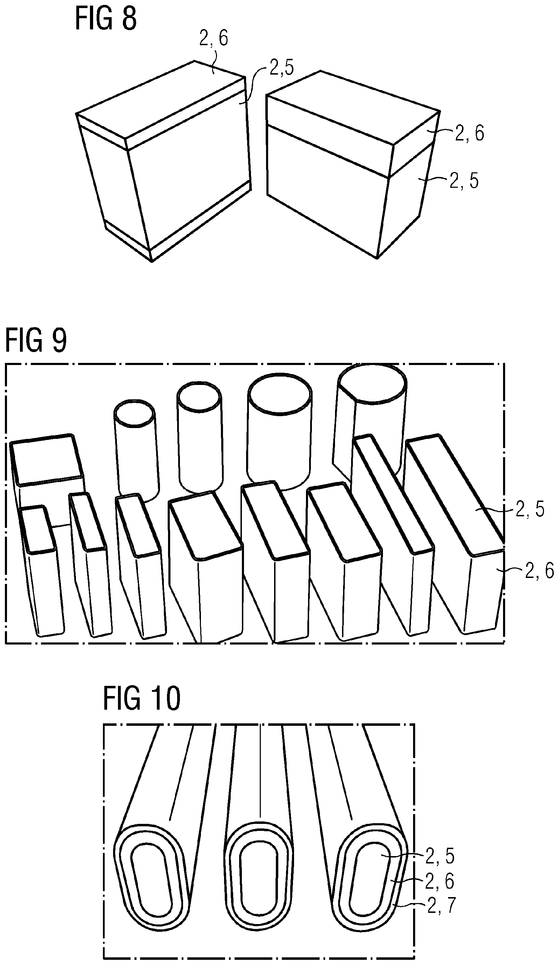

Die Figuren 7, 8, 9 und 10 zeigen unterschiedliche Ausführungsformen von Läuferstäben 2. Die Läuferstäbe 2 sind sogenannte Hybrid-Läuferstäbe und bestehen dabei im Querschnitt aus einem ersten Bereich 5, zumindest einem zweiten Bereich 6 und gegebenenfalls aus einem dritten Bereich 7, welche aus elektrisch leitfähigen Materialien, beispielsweise aus Metall, wie Kupfer, Aluminium oder Stahl, oder einer Legierung umfassend zumindest eines dieser Metalle und weitere Materialien, gebildet sind. Die elektrisch leitfähigen Materialien der Bereiche 5, 6 und 7 sind stoffschlüssig miteinander verbunden, beispielsweise durch Explosionsschweißen bzw. Sprengplattieren, Elektronenstrahl-Schweißen, LaserstrahlSchweißen, Galvanisierung, Draht-Elektronenstrahl-Auftragsschweißen, Laser-Auftragsschweißen oder Reibschweißen.

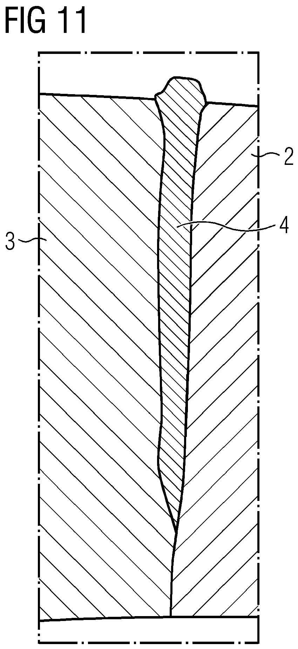

Figur 11 zeigt einen Schnitt in Radialrichtung durch eine Elektronenstrahl-Schweißverbindung. Gezeigt ist beispielhaft ein Läuferstab 2, der durch eine Schweißverbindung 4 mit einem Läuferkörper 3 verbunden ist.

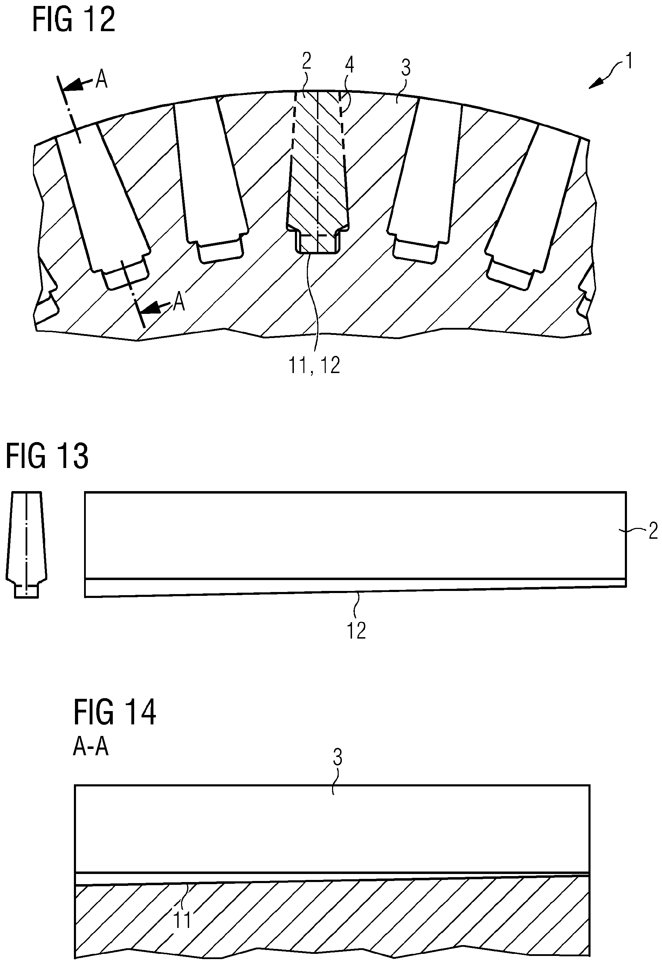

Die Figuren 12, 13 und 14 zeigen eine weitere Ausführungsform eines erfindungsgemäßen Rotors 1. Dargestellt ist in Figur 12 ein im Querschnitt im wesentlichen keilförmiger Läuferstab 2 in einer keilförmigen Nut bzw. Keilnut 8. Eine keilförmige Nut 8 bedeutet in diesem Zusammenhang, dass die Nut 8 Nutseitenwände 9 aufweist, welche zueinander geneigt sind, sodass eine Nutöffnung 10 verkleinert wird. Der Läuferstab 2 ist im dargestellten Ausführungsbeispiel über eine Schweißverbindung 4 mit einem Läuferkörper 3 verbunden. Der Läuferstab 2 ist mit einer Fläche 12 an einem Nutgrund 11 der Nut angeordnet. Diese Fläche 12 kann direkt am Läuferstab 2 oder, wie im Ausführungsbeispiel gezeigt, auf einem in Radialrichtung bestehenden Fortsatz des Läuferstabs 2 angeordnet sein. Die Figur 13 zeigt einen einzelnen Läuferstab 13 nach dieser Ausführungsvariante. Die Figur 14 zeigt einen Schnitt durch eine Keilnut aus Figur 12 nach dieser Ausführungsvariante. In den Figuren 13 und 14 ist dargestellt, dass sowohl die Fläche 12 des Läuferstabs 2 als auch der Nutgrund 11 der Nut in einem zu einer Axialrichtung des Läuferkörpers 3 geneigten Winkel ausgeführt sind. Dadurch kann durch Einführen des Läuferstabs 2 in den Läuferkörper 3 eine kraftschlüssige Klemmverbindung zwischen dem Läuferstab 2 und dem Läuferkörper 3 über drei Klemmflächen hergestellt werden. Die Klemmflächen sind zum einen die Flächen zwischen der Fläche 12 und dem Nutgrund 11 und zum anderen jeweils die Seitenflächen des Läuferstabs 2 und die Seitenwände 9 der Nut. Durch die Kombination aus Schweißverbindung 4, Keilnut und der Klemmverbindung zwischen der geneigte Fläche 12 und dem geneigten Nutgrund 11 wird eine äußerst stabile mechanische Fixierung des Läuferstabs 2 im Läuferkörper 3 erzielt. Die Schweißverbindung 4 ist jedoch optional, da bereits durch die Keilnut und die Verklemmung eine äußerst stabile mechanische Fixierung des Läuferstabs 2 mit dem Läuferkörper 3 erreicht wird. Der Läuferkörper 3 kann zusätzlich in einem nicht dargestellten Verfahren erwärmt werden, bevor der Läuferstab 2 in axialer Richtung in den Läuferkörper 3 eingeführt wird. Durch eine darauffolgende Abkühlung des Läuferkörpers 3 und eine entsprechende Schrumpfung wird eine noch weiter verbesserte mechanische Fixierung des Läuferstabs 2 im Läuferkörper 3 erreicht. Es hat sich gezeigt, dass sich im Betrieb des Rotors 1 der bzw. die Läuferstäbe 2 stärker als der Läuferkörper 3 erwärmen, wodurch die Klemmung aufrecht bleibt und sich sogar noch verstärkt.

### SCHLUSSBEMERKUNG

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

### BEZUGSZEICHENLISTE

- 1: Rotor
- 2: Läuferstab
- 3: Läuferkörper
- 4: Schweißverbindung
- 5: Erster Bereich
- 6: Zweiter Bereich
- 7: Dritter Bereich
- 8: Nut
- 9: Seitenwand
- 10: Nutöffnung
- 11: Nutgrund
- 12: Fläche

## Patentansprüche

1. Rotor (1) eines Käfigläufer-Motors mit einem Kurzschlusskäfig, wobei sich Läuferstäbe (2) des Kurzschlusskäfigs in Axialrichtung durch einen zylindrischen Läuferkörper (3) erstrecken, **dadurch gekennzeichnet, dass** die Läuferstäbe (2) mit dem Läuferkörper (3) jeweils durch eine Schweißverbindung (4) verbunden sind, insbesondere durch eine Elektronenstrahl- oder Laserstrahl-Schweißverbindung.

2. Rotor (1) nach Anspruch 1, **dadurch gekennzeichnet, dass** sich die Schweißverbindungen (4) in axialer Richtung im Wesentlichen über eine gesamte axiale Erstreckung des Läuferkörpers (3) erstrecken.

3. Rotor (1) nach einem der vorhergehenden Ansprüche, **dadurch gekennzeichnet, dass** der Läuferkörper (3) entlang seines Umfangs eine Mehrzahl an Nuten (8) in Axialrichtung aufweist, die Nuten (8) jeweils zwei Seitenwände (9) aufweisen, die sich in radialer Richtung von einer Nutöffnung (10) zu einem Nutgrund (11) erstrecken, die Läuferstäbe (2) in den Nuten (8) an den Seitenwänden (9) anliegend angeordnet sind und die Läuferstäbe (2) mit ihren an den Seitenwänden (9) anliegenden Flächen mit zumindest jeweils einer Seitenwand (9), vorzugsweise mit jeweils beiden Seitenwänden (9), jeweils durch die Schweißverbindung (4) verbunden sind.

4. Rotor (1) nach Anspruch 3, **dadurch gekennzeichnet, dass** sich die Schweißverbindungen (4) entlang der radialen Erstreckung der Seitenwände (9) zumindest über 30% der Seitenwände von der Nutöffnung (10) beginnend in Richtung des Nutgrunds (11) erstrecken, vorzugsweise zumindest über 60%, besonders bevorzugt zumindest über 90%.

5. Rotor (1) nach einem der vorhergehenden Ansprüche, **dadurch gekennzeichnet, dass** die Läuferstäbe (2) im Querschnitt jeweils einen ersten (5) und zumindest einen zweiten Bereich (6) aufweisen und die Bereiche (5, 6) aus voneinander unterschiedlichen elektrisch leitfähigen Materialien, insbesondere aus Metall, wie Kupfer, Aluminium oder Stahl, oder einer Legierung umfassend zumindest eines dieser Metalle und weitere Materialien, gebildet sind.

6. Rotor (1) nach Anspruch 5, **dadurch gekennzeichnet, dass** der zweite Bereich (6) den ersten Bereich (5) vollständig umgibt.

7. Rotor (1) nach einem der Ansprüche 5 oder 6, **dadurch gekennzeichnet, dass** die Läuferstäbe (2) im Querschnitt zumindest einen dritten Bereich (7) aufweisen, welcher aus einem vom ersten (5) oder zweiten Bereich (6) unterschiedlichen elektrisch leitfähigen Material, insbesondere aus Metall, wie Kupfer, Aluminium oder Stahl, oder einer Legierung umfassend zumindest eines dieser Metalle und weitere Materialien, gebildet ist.

8. Rotor (1) nach Anspruch 7, **dadurch gekennzeichnet, dass** der dritte Bereich (7) den zweiten Bereich (6) vollständig umgibt.

9. Rotor (1) nach einem der vorhergehenden Ansprüche, **dadurch gekennzeichnet, dass** der Läuferkörper (3) entlang seines Umfangs eine Mehrzahl an Nuten (8) in Axialrichtung aufweist, und die Nuten (8) einen Nutgrund (11) aufweisen, der in Axialrichtung zu einer Achse des Läuferkörpers in einem Winkel geneigt ausgeführt ist, und die Läuferstäbe (2) mit einer Fläche (12) am Nutgrund (11) angeordnet sind, welche in einem Winkel zur Axialrichtung zu einer Achse des Läuferkörpers (3) geneigt ausgeführt ist.

10. Rotor (1) nach einem der vorhergehenden Ansprüche, **dadurch gekennzeichnet, dass** die Läuferstäbe (2) formschlüssig im Läuferkörper (3) angeordnet sind.

11. Käfigläufer-Motor mit einem Rotor (1), **dadurch gekennzeichnet, dass** der Rotor (1) nach einem der Ansprüche 1 bis 10 ausgebildet ist.

12. Verfahren zur Herstellung eines Rotors (1) eines Käfigläufer-Motors nach einem der Ansprüche 1 bis 10, **dadurch gekennzeichnet, dass** die Schweißverbindungen (4) zur Verbindung der Läuferstäbe (2) mit dem Läuferkörper (3) mit einem Elektronenstrahl- oder Laserstrahl-Schweißverfahren hergestellt werden.

13. Verfahren nach Anspruch 12, **dadurch gekennzeichnet, dass** die elektrisch leitfähigen Materialien der Bereiche (5, 6, 7) stoffschlüssig miteinander verbunden werden, insbesondere durch Explosionsschweißen bzw. Sprengplattieren, Elektronenstrahl-Schweißen, Laserstrahl-Schweißen, Galvanisierung, Draht-Elektronenstrahl-Auftragsschweißen, Laser-Auftragsschweißen oder Reibschweißen.

14. Verfahren nach Anspruch 12 oder 13, **dadurch gekennzeichnet, dass** die Läuferstäbe (2) in den Läuferkörper (3) eingeführt werden und der Läuferkörper (3) vor dem Einführen der Läuferstäbe (2) aufgeheizt wird.
